# EUROPEAN PATENT SPECIFICATION

(11) **EP 2 512 617 B1**
(45) Date of publication and mention of the grant of the patent: **07.02.2018**
(21) Application number: 10798047.6
(22) Date of filing: 15.12.2010
(51) Int. Cl.: D04H 1/559, D04H 1/56, D04H 1/72, B01D 39/16, D04H 5/06

(54) **A METHOD FOR THE PREPARATION OF A PLA/PP BICOMPONENT FIBER FILTER MEDIA AND PRODUCTS THEREOF**
VERFAHREN ZUR HERSTELLUNG EINES PLA/PP-ZWEIKOMPONENTENFASERFILTERMEDIUMS UND PRODUKTE DARAUS
PROCÉDÉ DE PRÉPARATION D'UN MILIEU FILTRANT DE FIBRES À DEUX COMPOSANTS PLA/PP ET PRODUITS ASSOCIÉS

(30) Priority: 17.12.2009 CN 200910244869
(43) Date of publication of application: 24.10.2012
(73) Proprietor: Dinair AB, 592 22 Vadstena (SE); Tianjin Teda Filters Co., Ltd, Tianjin 300462 (CN)
(72) Inventor: ÖDLING, Patrik, S-592 30 Vadstena (SE); WEILI, Zhang, Tianjin 300193 (CN); HUAZE, Chen, Tianjin 300113 (CN); YU, She, Tianjin 300074 (CN)
(74) Representative: Awapatent AB
(86) International application number: PCT/EP2010/069774
(87) International publication number: WO 2011/073265

(56) References cited:
- WO-A1-93/10300
- WO-A1-2004/059058
- WO-A1-2007/041620
- WO-A1-2008/008074
- WO-A1-2008/140384
- US-A- 5 554 435
- US-A1- 2003 203 694

## Description

### Technical field

This invention relates to a fabrication technology of filter media, specifically a method of the preparation of the PLA/PP bi-component fiber filter media and products thereof.

### Technical background

As the society is developing and the awareness of the protection of the environment for living is arising, filter media, especially air filtration media, are more and more used. The function of air filter media is to remove the suspended solids, viruses and bacteria, etc in air. The main application areas of filter media include hospitals, pharmaceutical, electronics, automotive, and so on. In recent years, the demand of filter media in personal hygiene products and facilities which are used to remove particulates in housings are rising steadily. Based on their filtration efficiency, air filtration media could be classified into low efficiency, middle efficiency, sub-high efficiency and high efficiency (HEPA level). There are many kinds of methods of preparation of filtration media. Among these methods, the relatively common ones are carding and needling, melt-blown, thermo-bonding, spun lace, and so on.

Carding and needling method is widely used in the manufacture of low efficient and middle efficient filter media, while melt-blown method is used in the preparation of sub-high efficient and high efficient filter media. In addition, some multi-layer composite filter media can also achieve the level of middle efficiency and sub-high efficiency.

The raw materials of the present filtration media are generally based on petrochemical products such as polyolefin and polyester. Although petrochemical-derived materials have lower hazard effect on the environment and human health in the comparison with glass fibers, they have limited using time. In addition, petrochemical-derived materials are consumable goods. The large scale production and application could still have some bad effects on the environment.

As a new biodegradable material, polylactic acid (PLA) fiber is attracting more and more attentions in recent years since it can be used as a sustainable alternative to petrochemical-based materials. PLA could be obtained from the polymerization of lactic acid monomer which can be derived from the fermentation of starch-rich products such as corn and wheat. The final PLA fiber could be fabricated by spinning of these synthetic PLA. In the entire process, no petrochemical-derived products are involved. In addition, the used up PLA could be decomposed into carbon dioxide and water with the help of micro-organisms in soil and water. The regeneration cycle of PLA is short, around one to two years. So the fibers made from PLA are biodegradable and environmentally friendly fibers.

The application of PLA fibers in filter media has been reported in many countries. The common method is to card the PLA fibers into webs first, and then follows by the processes of needling or thermal bonding to shape them into the filtration media. However, there are some limitations of PLA fiber media fabricated by this method, such as the low filtration efficiency, the small dust-holding capacity, and the relatively high pressure drop during the filtration process. Furthermore, the materials can easily be compressed during the processes (due to the initial stiffness of PLA fibers is low, which can cause a deformation under small load. Therefore pure PLA fiber media can be easily compressed during carding or needling). Due to the limitations mentioned above, it is not good to prepare PLA fiber filter media by this method, and a lot of energy will be consumed in this method as well.

Therefore, a Swedish Patent (see WO2008140384 (A1)) proposes a solution which is mixing the PLA fiber with polyester fiber. The mixed fibers can avoid being compressed during the carding process, and the polyester fiber component can also play a role of bonding. In this method, the PLA fiber and polyester fiber are carded into a mixed fiber webs and then the mixed fiber webs are further strengthened. In such fabrication process, the problem of filter media to be compressed is avoided. However, the filtration efficiency of the filter media made by this method is low, which can not satisfy the requirements of high performance filters (such as the level above F7 in EN779 standard). So there is a need to improve the filtration efficiency of PLA based filter media.

### Summary of the invention

Considering limitations of PLA filter media mentioned above, the technical problem that this invention intends to resolve is to provide a new method of preparation of PLA/PP bi-component fiber filter media and products thereof. Comparing with other methods, this new method has many advantages. For example, preparation process is short and controllable, and energy could be saved in this process as well. In addtion, the filter media fabricated in this method show high filtration efficiency, high dust absorb rate, good anti-compression, low pressure drop, and so on.

In this invention, the technical solution to solve the technical issues mentioned above in preparation process is to design a new process of preparation of a PLA/PP bi-component fibers filter media. It includes the following procedures:
1. The preparation of PLA carding fiber flow. The PLA fibers are fed into an air carding machine, and then an orderly carded PLA fiber flow is formed after the carding.
2. The preparation of PP melt-blown fiber flow. The PP raw material is first melted under the temperature of 180∼290 °C in a screw extruder, and then the extruded PP melt is filtrated and transported to the metering pump. After measuring, the PP melt is conveyed to the spinneret die to spin the fibers. PP fibers are drawn under the hot air with the temperature up to 250∼300 °C, which is added from the both sides of the spinneret hole. Therefore the melt-blown PP fiber flow is formed.
3. The preparation of PLA/PP bi-component fiber filter media. The PLA air-carded fiber flow is mixed with PP melt-blown fiber flow at the mass ratio of PLA: PP = 40-85%:60-15%. After cooling, a fiber web is formed on the collector. The formed fiber web on the collector could be directly shaped into PLA/PP bi-component fiber filter media by thermo-bonding which is due to the presence of surplus heat in PP fibers. The variation of the mixing ratio of PLA to PP mentioned above could be achieved by controlling the amount of the PLA fiber fed into air carding machine and the metering pump in PP melt-blown fiber process.

The preparation method of PLA/PP bi-component fibers filter media proposed in this invention is essentially different from the exciting ones. It is not a simple mixing of one fiber web with another, and then reinforced by a followed needling or thermal bonding process. Instead, a carded PLA fiber flow and a PP melt-blown fiber flow are directly mixed into the fiber webs in this method. In addition, the surplus heat residing in PP fibers can reinforce and shape fiber webs into a filter media. Therefore, this preparation method shows several characteristics such as short and controllable preparation process, energy saving, and so on. The filter media fabricated by this method possess a high filtration performance.

In this invention, the technical solution of the preparation of the filtration based material is to design a PLA/PP bi-component fiber filter media. This filter media could be directly prepared by the method mentioned in this invention. In the obtained PLA/PP bi-component fiber filter media, the linear density of PLA fiber is 3∼10dtex, the length is 34∼70mm; the diameter of PP melt-blown fiber is in the range of 0.8∼10µm and the average diameter is 6∼8µm. The weight percentage of PLA fiber and PP fiber is 40∼85% and 60∼15%, respectively.

The existing PLA/PP bi-component fiber filter media are just the mixture of PLA carding fiber web and ordinary PP carding fiber web. The distribution of linear density of fiber is narrow and porosity is low. The filter media of the invention shows the characteristics of melt-blown nonwoven fabrics, for example, a fluffy shape, the wide distribution of fiber linear density, high porosity, high filtration efficiency, high dust absorption rate, resistance to compression, low pressure drop, and so on.

### Description of the figures

Figure 1: The prior art method of preparation of PLA/PP bi-component fibers filter media.
Figure 2: The process designed in this invention of preparation of PLA/PP bi-component fibers filter media.
Figure 3: The cross-section structure of PLA/PP bi-component fibers filter products obtained from this invention.

### Detailed description of preparation of PLA/PP bi-component fibers filter media

The preparation method in this invention is further illustrated with an example in the following.

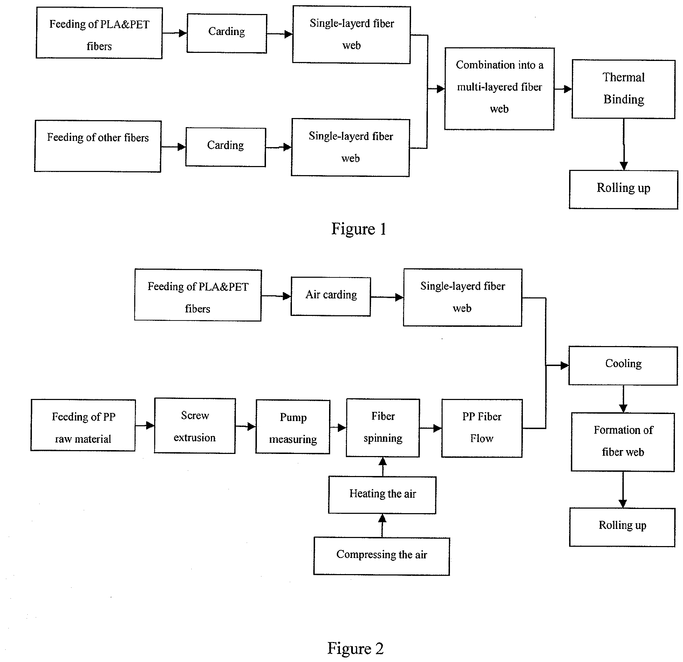

The prior art preparation process of PLA fiber filtration media comprises several steps as shown in Figure 1. At beginning, two parts of the fiber are fed into the carding machine separately: one part of the fibers is the mixture of PLA fibers and PET fibers, another part of the fibers is the mixture of PLA fibers and PP fibers or some other kind of fiber components. After the air carding, the two parts of the fibers are formed into the single-layered fiber webs separately. Then the two separate single-layered fibers webs combine together and is reinforced by the thermal bonding. Finally, the reinforced fiber webs are rolled up by the rolling device.

Although the PLA fiber are carded with other fiber components to avoid the undesired compression of PLA fiber in the carding process in the existing technology of preparation of PLA fiber based filter media, the filtration efficiency of the filter media fabricated is relatively low, which cannot meet the requirements of the high-performance filters (such as the F7 and higher level in EN779 standard). These filter media have a relatively high fiber linear density, which affect the efficiency of the filter. In addition, the carding followed by thermo-bonding method is not flexible enough to make the PLA fiber filter media with a gradient distribution of fiber density. Therefore, the dust-holding capacity and the using life of this kind of filter media are low.

The preparation method of PLA/PP bi-component fiber filter media designed in the invention is the combination of carded PLA fibers and PP melt-blown fibers. The process consists of the following steps, as shown in figure 2.
1. The preparation of PLA carding fiber flow. The PLA fibers are fed into an air carding machine, and then an orderly carded PLA fiber flow would be formed after the carding.
2. The preparation of PP melt-blown fiber flow. The PP raw material is first melted under the temperature of 180∼290 °C in a screw extruder, and then the extruded PP melt is filtrated and transported to the metering pump. After measuring, the PP melt is conveyed to the spinneret die to spin the fibers. PP fibers are drawn under the hot air with the temperature up to 250∼300 °C, which is added from the both sides of the spinneret hole. Therefore the PP melt-blown fiber flow would be formed.
3. The preparation of PLA/PP bi-component fiber filter media. The PLA air-carded fiber flow is mixed with PP melt-blown fiber flow at the mass ratio of PLA: PP = 40∼60%:85∼15%. After cooling, a fiber web is formed on the collector. The formed fiber web on the collector could further shape into PLA/PP bi-component fiber filter media by thermo-bonding which is due to the presence of surplus heat in PP fibers. The mixing ratio of PLA and PP fiber mentioned above could be controlled by adjusting the amount of the PLA fiber fed into air carding machine and the metering pump in PP melt-blown fiber process.

In this invention, the PLA fibers are carded by an air carding process which avoids the compression of PLA fiber by mechanical force and the PP fiber prepared by melt-blown method is ultrathin which can contribute to the high filtration efficiency. In addition, the residue heat in the melt-blown PP fibers could reinforce and shape the fiber web mixtures into the final filter media by thermo-bonding. Therefore, this preparation method has a short and controllable preparation process and is energy saving. The filter media fabricated by this method possess a high filtration performance and long life time. Furthermore, with the addition of PLA fibers, the filter media is a environmentally friendly filter media with a relatively high bio-degradability.

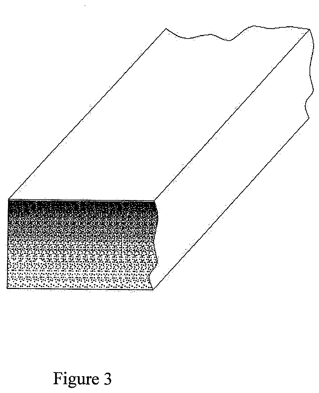

Another feature which is worth being mentioned in this preparation method is that a bi-component fiber filter medium with a gradient distribution of PLA fiber density or a continuously changing distribution of PLA fiber density can be prepared (see Figure 3, the variation range of PLA fiber density is 85-0%). In the production process, the mixing ratio of PLA fiber flow to melt-blown PP fiber flow can be adjusted by the control of the output of PLA fiber flow in the air carding machine. So, by control of the fiber mixing ratio of PLA/PP, the fiber density on the cross-section has a gradient distribution or continuous changing distribution. Namely, the weight percentage of PLA fiber gradually decreases from one fiber layer to another fiber layer in the fiber filter media obtained. While, PP fiber content gradually increases from one fiber layer to another fiber layer. PLA fiber density with a gradient distribution or a continuous changing distribution can improve the dust-holding capacity of fiber filter media and increase their life time.

The distribution of PLA fibers in the filter media varies from high to low. When PLA fiber content is high (melt-blown PP fiber is relatively low), the average linear density of fiber is high which can intercept large particles. While PLA fiber content is low (melt-blown PP fiber is relative high), the porosity of the filter media is high and the pore size inside the media is small, so the small size particles can be captured here. Such structures give the final fiber filter media a differential filtration characteristic and a high filtration efficiency and service life. In the meantime, the dust-holding capacity of such structures is also high.

In the filter media, the linear density of PLA fiber is 3∼10dtex and the length is 34∼70mm; the diameter of PP melt-blown fiber is in the range of 0.8∼10µm and the average diameter is 6∼8µm. The weight percentage of PLA fiber and PP fiber is: PLA fiber 40∼85%, PP fiber 60∼15%. Since there are biodegradable PLA fibers and ultrathin PP melt-blown fibers in the filter media, the filter media possess the feature structure of melt-blown non-woven fabrics. In addition, the PLA fiber density has a gradient or continuous changing distribution in the filter media, so the products show a high filtration efficiency and dust-holding capacity, which satisfies the requirements of the high-performance filter media. The bi-component PLA fiber filter media fabricated by this method have been evaluated by Fiatec Filter&Aerosol Technologic GmbH in Germany. The filtration efficiency is up to 96% and the dust-holding capacity is about153.5g@450Pa. So, it reaches the F9 level in EN779 standard.

Some other things which are not described in the invention are also applicable for the existing technologies.

The following gives some examples about the preparation of PLA/PP bi-component fiber filter media by using this method, but the application of this invention is not only limited to these examples.

### Example 1

### Preparation of PLA/PP bi-component fiber filter media with weight ratio of PLA fiber to PP fiber of 40:60

1. The preparation of PLA carding fiber flow. The PLA fibers are fed into an air carding machine, and then an orderly carded PLA fiber flow would be formed after the carding.
2. The preparation of PP melt-blown fiber flow. The PP raw material is first melted under the temperature of 250 °C in a screw extruder, and then the extruded PP melt is filtrated and transported to the metering pump. After measuring, the PP melt is conveyed to the spinneret die to spin the fibers. PP fibers are drawn under the hot air with the temperature of 260 °C, which is added from the both sides of the spinneret hole. Therefore the PP melt-blown fiber flow would be formed.
3. Adjustment of the feeding content of PLA fiber flow or the meter pump in PP melt-blown process could control the weight ratio of PLA fiber flow to melt-blown PP fiber flow of 40: 60. After cooling, a fiber web is formed on the collector. The formed fiber web on the collector could be further shaped into PLA/PP bi-component fiber filter media by thermo-bonding which is due to the presence of surplus heat in PP fibers.

In this example, the fiber filter media is 80 g/m². The average diameter of PP fibers is about 7-9µm and the PLA fiber is uniformly distributed in the filter media. The product is relatively soft by touch. After the testing, the filtration efficiency is about 90% and the dust-holding capacity is about 180g@450Pa, which meets the requirements of F7 level in EN779 standard.

### Example 2

### Preparation of PLA/PP bi-component fiber filter media with weight ratio of PLA fiber to PP fiber of 80:20

1. The preparation of PLA carding fiber flow. The PLA fibers are fed into an air carding machine, and then an orderly carded PLA fiber flow would be formed after the carding.
2. The preparation of PP melt-blown fiber flow. The PP raw material is first melted under the temperature of 270 °C in a screw extruder, and then the extruded PP melt is filtrated and transported to the metering pump. After measuring, the PP melt is conveyed to the spinneret die to spin the fibers. PP fibers are drawn under the hot air with the temperature of 280 °C, which is added from the both sides of the spinneret hole. Therefore the PP melt-blown fiber flow would be formed.
3. Adjustment of the feeding content of PLA fiber flow or the meter pump in PP melt-blown process could control the weight ratio of PLA fiber flow to melt-blown PP fiber flow of 80:20. After cooling, a fiber web is formed on the collector. The formed fiber web on the collector could be further shaped into PLA/PP bi-component fiber filter media by thermo-bonding which is due to the presence of surplus heat in PP fibers.

In this example, the fiber filter media is 90 g/m². The average diameter of PP fibers is about 6-8µm and the PLA fiber is uniformly distributed in the filter media. The product is relatively soft by touch. After the testing, the filtration efficiency is about 95% and the dust-holding capacity is about 175g@450Pa, which meets the requirements of F8 level in EN779 standard.

### Example 3

### Preparation of PLA/PP bi-component fiber filter media with weight ratio of PLA fiber to PP fiber of 85:15

1. The preparation of PLA carding fiber flow. The PLA fibers are fed into an air carding machine, and then an orderly carded PLA fiber flow would be formed after the carding.
2. The preparation of PP melt-blown fiber flow. The PP raw material is first melted under the temperature of 280 °C in a screw extruder, and then the extruded PP melt is filtrated and transported to the metering pump. After measuring, the PP melt is conveyed to the spinneret die to spin the fibers. PP fibers are drawn under the hot air with the temperature of 290 °C, which is added from the both sides of the spinneret hole. Therefore the PP melt-blown fiber flow would be formed.
3. Adjustment of the feeding content of PLA fiber flow or the meter pump in melt-blown PP process could control the weight ratio of PLA fiber flow to melt-blown PP fiber flow of 85:15. After cooling, a fiber web is formed on the collector. The formed fiber web on the collector could be further shaped into PLA/PP bi-component fiber filter media by thermo-bonding which is due to the presence of surplus heat in PP fibers. In this process, the weight percentage of PLA fiber in the fiber filter media is decrease and shows a gradient distribution on the cross-section by the adjustment of the output of the carded PLA fiber in the air carding machine (adjustment of the air flow speed of the PLA fiber flow).

In this example, the fiber filter media is 90 g/m². The average diameter of PP fibers is about 5-7µm and the PLA fiber shows a gradient distribution. The product is relatively soft by touch. After the testing, the filtration efficiency is about 96.5% and the dust-holding capacity is about 153.5g@450Pa, which meets the requirements of F9 level in EN779 standard.

## Claims

1. A method for the preparation of PLA/PP bi-component fiber filter media and products thereof, the method comprising the following process:
1.) the preparation of PLA carding fiber flow, wherein the PLA fibers are fed into an air carding machine, and then an orderly carded PLA fiber flow is formed after the carding;
2.) the preparation of PP melt-blown fiber flow, wherein the PP raw material is first melted under the temperature of 180-290 °C in a screw extruder, and then the extruded PP melt is filtrated and transported to the metering pump, after measuring, the PP melt is conveyed to the spinneret die to spin the fibers, the PP fibers are drawn under the hot air with the temperature up to 250∼300 °C, which is added from the both sides of the spinneret hole thereby forming the PP melt-blown fiber flow;
3.) the preparation of PLA/PP bi-component fiber filter media, wherein the PLA air-carded fiber flow is mixed with PP melt-blown fiber flow at the mass ratio of PLA to PP of 40∼85:60∼15 %, after cooling, a fiber web is formed on a collector, the formed fiber web on the collector is further shaped into PLA/PP bi-component fiber filter media by thermo-bonding which is due to the presence of surplus heat in PP fibers.

2. The method according to claim 1, wherein the mixing ratio of the carded PLA flow and melt-blown PP fiber flow is controllable by adjusting the output of carded PLA fiber flow in the air carding process and the metering pump in the PP melt-blow fiber process.

3. A fiber filter media containing PLA and PP fibers obtainable by the method according to any one of claims 1 or 2, wherein in the obtained PLA/PP bi-component fiber filter media, the linear density of PLA fiber is 3∼10dtex, the length is 34∼70mm; the diameter of PP melt-blown fiber is in the range of 0.8∼10µm and the average diameter of said PP melt-blown fibers is 6∼8µm, and
wherein the weight percentage of PLA fiber and PP fiber is: PLA fiber 40-85%, PP fiber 60-15%.

## Patentansprüche

1. Verfahren zur Herstellung eines PLA/PP-Zweikomponentenfaserfiltermediums und Produkte daraus, wobei das Verfahren den folgenden Prozess umfasst:
1.) Herstellen des PLA-Kardierfaserflusses, wobei die PLA-Fasern in eine Luft-Kardiermaschine gespeist werden, und dann ein ordentlich kardierter PLA-Faserfluss nach Kardieren gebildet wird;
2.) Herstellen eines schmelzgeblasenen PP-Faserflusses, wobei das PP-Rohmaterial zuerst bei einer Temperatur von 180 ∼ 290 °C in einem Schneckenextruder geschmolzen wird und dann die extrudierte PP-Schmelze gefiltert und zur Dosierpumpe transportiert wird, wobei nach Messen die PP-Schmelze zum Spinndüsenkopf gefördert wird, um die Fasern zu spinnen, und die PP-Fasern unter der heißen Luft, die von beiden Seiten des Spinndüsenlochs zugegeben wird, bei einer Temperatur von bis zu 250 ∼ 300 °C gezogen werden, um damit den schmelzgeflossenen PP-Faserfluss zu bilden;
3.) Herstellen des PLA/PP-Zweikomponentenfaserfiltermediums, wobei der luftkardierte PLA-Faserfluss mit dem schmelzgeblasenen PP-Faserfluss bei einem Masseverhältnis PLA zu PP von 40 ∼ 85:60 ∼ 15 % vermischt wird, nach Kühlen ein Faservlies auf einem Sammler ausgebildet wird und das ausgebildete Faservlies auf dem Sammler durch Thermobindung, die auf die Anwesenheit von überflüssiger Wärme in PP-Fasern zurückzuführen ist, weiter in ein PLA/PP-Zweikomponentenfaserfiltermedium geformt wird.

2. Verfahren nach Anspruch 1, wobei das Mischverhältnis des kardierten PLA-Flusses und des schmelzgeblasenen PP-Faserflusses durch Einregeln des Outputs des kardierten PLA-Faserflusses im Luftkardierprozess und der Dosierpumpe im schmelzgeblasenen PP-Faserprozess gesteuert werden kann.

3. Faserfiltermedium, das PLA- und PP-Fasern enthält, die durch das Verfahren nach einem der Ansprüche 1 oder 2 erhalten werden können, wobei im erhaltenen PLA/PP-Zweikomponentenfaserfiltermedium die lineare Dichte der PLA-Faser 3 ∼ 10 dtex beträgt, die Länge 34 ∼ 70 mm ist; der Durchmesser der schmelzgeblasenen PP-Faser im Bereich von 0,8 ∼ 10 µm liegt und der durchschnittliche Durchmesser der schmelzgeblasenen PP-Fasern 6 ∼ 8 µm ist, und wobei der prozentuale Gewichtsanteil der PLA-Faser und PP-Faser wie folgt ist: PLA Faser 40 ∼ 85 %, PP-Faser 60 ∼ 15 %.

## Revendications

1. Procédé de préparation d'un milieu filtrant de fibres à deux composants PLA/PP et de leurs produits, le procédé comprenant le processus suivant :
1.) la préparation d'un écoulement de fibres de cardage PLA, où les fibres PLA sont alimentées dans une machine à carder à air, puis un écoulement de fibres PLA cardées de manière ordonnée est formé après le cardage ;
2.) la préparation d'un écoulement de fibres soufflées à l'état fondu PP, où la matière brute de PP est d'abord fondue sous la température de 180 ∼ 290 °C dans un extrudeur à vis, puis le PP extrudé fondu est filtré et transporté à la pompe de dosage, après la mesure, le PP fondu est transporté au moule à filière pour filer les fibres, les fibres PP sont tirées sous l'air chaud avec la température jusqu'à 250 ∼ 300 °C, qui est ajouté à partir des deux côtés du trou de filière formant ainsi l'écoulement de fibres à l'état fondu PP ;
3.) la préparation d'un milieu filtrant de fibres à deux composants PLA/PP, où l'écoulement de fibres cardées à l'air PLA est mélangé avec l'écoulement de fibres soufflées à l'état fondu PP au rapport en masse de PLA à PP de 40 ∼ 85 : 60 ∼ 15 %, après le refroidissement, une toile de fibres est formée sur un collecteur, la toile de fibres formée sur le collecteur est en outre formée en un milieu filtrant de fibres à deux composants PLA/PP par thermo-liaison qui est due à la présence d'un surplus de chaleur dans les fibres PP.

2. Procédé selon la revendication 1, dans lequel le rapport de mélange de l'écoulement de PLA cardées et de l'écoulement de fibres PP soufflées à l'état fondu est contrôlable en ajustant la sortie de l'écoulement de fibres PLA cardées dans le processus de cardage à l'air et la pompe de dosage dans le processus de fibres soufflées à l'état fondu PP.

3. Milieu filtrant de fibres contenant des fibres PLA et PP que l'on peut obtenir par le procédé selon l'une quelconque des revendications 1 ou 2, dans lequel dans le milieu filtrant de fibres à deux composants PLA/PP obtenu, la densité linéaire des fibres PLA est de 3 ∼ 10 dtex, la longueur est de 34 ∼ 70 mm ; le diamètre des fibres soufflées à l'état fondu PP se situe dans la plage de 0,8 ∼ 10 µm, et le diamètre moyen desdites fibres soufflées à l'état fondu PP est de 6 ∼ 8 µm, et où le pourcentage en poids des fibres PLA et des fibres PP est : fibres PLA 40 ∼ 85 %, fibres PP 60 ∼ 15 %.
